**Europäisches Patentamt**

**European Patent Office**

**Office européen des brevets**

(11) Veröffentlichungsnummer: **0 188 778**
A2

# (12) EUROPÄISCHE PATENTANMELDUNG

(21) Anmeldenummer: 85116248.7

(22) Anmeldetag: 19.12.85

(51) Int. Cl.⁴: **C 09 K 3/10**, F 16 J 15/00

(30) Priorität: 17.01.85 DE 3501361
13.06.85 DE 3521138

(43) Veröffentlichungstag der Anmeldung: 30.07.86
Patentblatt 86/31

(84) Benannte Vertragsstaaten: **DE FR GB IT**

(71) Anmelder: **GOETZE AG,
Bürgermeister-Schmidt-Strasse 17,
D-5093 Burscheid 1 (DE)**

(72) Erfinder: **Zerfass, Hans-Rainer, Dr., Finkenweg 8,
D-5093 Burscheid (DE)**
Erfinder: **Giesen, Franz-Josef, Am Alten Turm 1a,
D-5068 Odenthal 3 (DE)**

(54) Imprägnierte Flachdichtung, insbesondere Zylinderkopfdichtung für Verbrennungskraftmaschinen.

(57) Eine Weichstoffflachdichtung, wie insbesondere eine Zylinderkopfdichtung oder Auspuffflanschdichtung für Verbrennungskraftmaschinen, bestehend aus einem gegebenenfalls metallisch verstärkten Faservlies, ist mit einem Silikon imprägniert, welches in der fertigen Dichtungsplatte unter der Einwirkung von Radikalbildern, wie insbesondere Peroxiden, in einer ersten Stufe thermisch vernetzt und danach in einer zweiten Stufe mit einer energiereichen Strahlung, wie insbesondere UV-Strahlung, vor- oder nachvernetzt ist. Durch die Anwendung einer radikalischen Vernetzung sind die Silikonimprägniermittelansätze längere Zeit haltbar, und die Dichtungen können wirtschaftlich in der Massenfertigung hergestellt werden. Die Dichtungen besitzen darüberhinaus höhere Festigkeits- und Beständigkeitswerte sowie hervorragende Funktionseigenschaften. Auf die Dichtungen können nach der thermischen Vernetzung auch ganzflächig oder partiell feinkörnige bis pulverige Stoffe mit speziellen Eigenschaften oder auch polymere und metallische Überzüge und Auflagen aufgetragen werden, die dann beim Nachvernetzen an die Dichtung besonders gut gebunden werden.

ACTORUM AG

- 1 -

<u>Imprägnierte Flachdichtung, insbesondere Zylinder-
kopfdichtung für Verbrennungskraftmaschinen.</u>

Die Erfindung betrifft eine Weichstoffflachdichtung, wie
insbesondere eine Zylinderkopfdichtung oder eine Auspuffflanschdichtung für Verbrennungskraftmaschinen, bestehend
aus einem gegebenenfalls metallisch verstärkten Faservlies, das mit einem im Endzustand vernetzten additionsvernetzenden Silikonharz imprägniert ist, das Herstellungsverfahren und das Imprägniermittel zum Imprägnieren
der Dichtung.

Moderne Weichstoffflachdichtungen für Verbrennungskraftmaschinen, wie insbesondere Zylinderkopfdichtungen oder
Auspuffflanschdichtungen, bestehen bevorzugt aus gegebenenfalls metallisch verstärkten Faservliesen und werden
vor allem zur Erhöhung ihrer Festigkeit, zur Verbesserung
ihrer Medienbeständigkeit und zur Erhöhung ihrer Abdichtgüte mit vernetzenden flüssigen Imprägniermitteln imprägniert, und das Imprägniermittel ist anschließend in der
fertigen Dichtungsplatte bevorzugt thermisch vernetzt.

Bevorzugte Imprägniermittel sind beispielsweise nach der
US-PS 3.970.322 vor allem lösungsmittelfreie flüssige
Polybutadiene, Polyacrylate oder Systeme mit Isocyanaten
oder Epoxiden, die in der fertigen Dichtung ohne Abgabe
verdampfender und den Weichstoff aufblähender Substanzen
unter gegebenenfalls Zusatz an Peroxid oder Schwefel als
Vernetzer thermisch vernetzen.

Diese bekannten Imprägniermittel sind im endvernetzten Zustand mehr oder weniger hart und spröde, so daß die imprägnierten Dichtungen eine nicht ausreichende Plastizität aufweisen und funktionstechnisch nicht brauchbar sind. Deshalb werden die Imprägniermittel in der einbaufertigen Dichtung lediglich bis zur Formstabilität teilvernetzt, die Dichtungen sind dann noch plastisch oder elastisch verformbar und können sich beim Einbau den Unebenheiten der Dichtflächen anpassen. Die Endvernetzung des Imprägniermittels erfolgt dann in der Betriebswärme des Motors nach dem Einbau.

Teilvernetzte Imprägniermittel besitzen jedoch noch relativ viele reaktive Gruppen, die bei längerer Lagerung durch Umwelt- und Alterungseinflüsse unter Verhärtung der Dichtungen unkontrolliert nachvernetzen. Solche Zylinderkopfdichtungen sind dann nach längerer Lagerzeit nicht mehr verwendbar bzw. sie müssen durch besondere Maßnahmen beim Lagern vor der Nachvernetzung geschützt werden. Deshalb ist man in der Praxis auf der Suche nach geeigneten, weitgehend lösungsmittelfreien Imprägniermitteln für Flachdichtungen mit verbesserter Lagerbeständigkeit.

Inzwischen sind flüssige additionsvernetzende Silikonharze, wie insbesondere Polymethylvinylsilikonharze oder Silikonacrylate, bekannt, die unter Zusatz von Platinsalzkatalysatoren zu elastisch verformbaren oder lagerbeständigen Produkten thermisch vernetzen. Nach den Angaben der Hersteller müssen jedoch derartige Systeme frei von Aminen, Schwefelverbindungen und schwefelabgebenden Sub-

- 3 -

stanzen bleiben, damit der Katalysator nicht vergiftet
wird und das System ausreichend vernetzt.

Nach der DE-OS 32 45 664 wurden schon unter Katalysatorzusatz additionsvernetzende Silikonharze zum Imprägnieren
von Zylinderkopfdichtungen verwendet. In diesem Fall müssen auch die Dichtungsfaservliese selbst frei von Aminen,
Schwefelverbindungen oder Schwefeldonatoren sein. Da
Dichtungsfaservliese meist mineralische oder organische
Naturfasern enthalten und die Latexbindemittel mit den
üblichen Kautschuk-Zusatzstoffen vulkanisieren, sind katalysatorgiftfreie Faservliese nur kostspielig herzustellen. Die Silikonharzimprägniermittelbäder werden zusätzlich aus den Silikonharzen und dem Platinsalzkatalysator
zusammengemischt, und nach dem Mischen ist der flüssige
Silikonharzansatz nur noch während eines begrenzten Zeitraumes, wie entsprechend der DE-OS 32 45 664 während
16 Stunden, einsetzbar. Mit derartigen Bädern lassen sich
aber vor allem Zylinderkopfdichtungen in der Massenfertigung wirtschaftlich nicht herstellen.

Der Erfindung liegt daher die Aufgabe zugrunde, silikonharzimprägnierte Weichstoffflachdichtungen zu schaffen,
welche einfach und kostensparend herzustellen sind. Durch
die Erfindung sollen vor allem radikalisch vernetzende
flüssige Silikonsysteme wirtschaftlich und möglichst wenig störanfällig zum Imprägnieren von Flachdichtungen
einsetzbar werden.

Diese Aufgabe wird durch eine Flachdichtung aus Weich-

- 4 -

stoff gelöst, welche mit einem radikalisch vernetzenden Silikon imprägniert ist, wobei erfindungsgemäß entweder der Oberflächenbereich durch energiereiche Strahlung vorvernetzt ist und der Querschnitt der Dichtungen durch den Einfluß von Radiakalbildnern thermisch nachvernetzt wird oder unter Einfluß von Radikalbildnern der Querschnitt vorvernetzt und der Oberflächenbereich thermisch nachvernetzt wird.

Und zwar wurde überraschenderweise gefunden, daß flüssige Silikonimprägniermittel mit geeigneten Radikalbildnerzusatz bei Raumtemperatur praktisch unbegrenzt ohne Veränderung ihrer Eigenschaften bleiben. Auf diese Weise können Imprägniermittelansätze großvolumig hergestellt werden, und die Dichtungen können mit diesem Ansatz ohne Auswechseln des Imprägniermittels über längere Zeit verlustfrei bevorzugt durch Tauchen wirtschaftlich imprägniert werden. Bei der thermischen Vernetzung des Imprägniermittels in der fertigen Dichtungsplatte bilden sich aus den Radikalbildnern Radikale, die die Vernetzung induzieren. Dabei wurde gefunden, daß an den Oberflächen der Dichtungen, offensichtlich durch den Luftsauerstoff beeinflußt, die Vernetzung des Imprägniermittels gestört wird. Die Dichtung bleibt im Oberflächenbereich klebrig. Durch die erfindungsgemäße Vor- oder Nachvernetzung des Imprägniermittels an der Oberfläche mit energiereicher Strahlung wird die für die Montage unerwünschte Klebrigkeit beseitigt.

- 5 -

Die zum Imprägnieren verwendeten Silikone sind bevorzugt flüssige Polymethylvinylsilikone oder flüssige Silikonacrylate, und als Radikalbildner werden bevorzugt handelsübliche organische Peroxide in Mengen von bevorzugt 2 bis 5 Gewichtsprozent eingesetzt. Die Silikone können zusätzlich 2 bis 5 Gewichtsprozent eines Photoinitiators enthalten, der die Endvernetzung des Imprägniermittels im Oberflächenbereich durch energiereiche Strahlung, wie bevorzugt UV-Strahlung, verbessert.

Zur Herstellung der erfindungsgemäßen Flachdichtung wird zunächst ein Silikonansatz mit bevorzugt 2 bis 50 Gewichtsprozent Radikalbildnerzusatz hergestellt, mit diesem Ansatz wird die Dichtung nach einem der bekannten Verfahren, wie Tauchen, Aufstreichen oder Aufsprühen, imprägniert, und daran anschließend erfolgt die Vernetzung des Imprägniermittels zweistufig zunächst im Ofen bei Temperaturen zwischen 200 und 300°C und danach durch Bestrahlen der Dichtungsoberflächen beidseitig mit bevorzugt einer UV-Lampe.

Es wurde ferner gefunden, daß die Dichtungen zwischen Ofenhärtung und UV-Härtung beschichtet werden können, und daß die Beschichtungsmassen auf der Dichtung nach der UV-Härtung besonders gut haften. Als Beschichtungsmassen werden bevorzugt UV-härtende Polymere eingesetzt, die zusammen mit dem klebrigen Imprägniermittel beim UV-Härten vernetzen.

Im Sinne der Erfindung können aber auch auf die klebrigen Dichtungsoberflächen nach der Ofenvernetzung feste, bevorzugt pulverige bis feinkörnige Stoffe mit bevorzugt guten Schmiereigenschaften, wie Teflonpulver oder Molybdänsulfid, oder Antihafteigenschaften, wie Metallseifen, mit oder ohne Bindemittelzusatz aufgetragen werden. Die festen Stoffe werden dann bei der UV-Vernetzung fest an die Dichtung gebunden, und die Dichtung erhält optimale Gleit- oder Dehäsiveigenschaften. Die Polymer- oder Feststoffbeschichtungen können auf die Dichtungen ganzflächig oder partiell auch mit unterschiedlicher Dicke aufgetragen werden. Die Dichtung erhält dabei beim dickeren partiellen Auftrag des Materials Auflagen, die die Dichtpressung, wie an sich bekannt, in besonders beanspruchten Bereichen erhöhen. Im Prinzip können auf die klebrigen Dichtungsoberflächen auch Metallbleche partiell aufgetragen werden, die lokal die Dichtpressung unter gleichzeitig guter Haftung erhöhen.

Durch die Erfindung ist eine Flachdichtung geschaffen, welche vor allem durch die Silikonimprägnierung eine hohe Festigkeit, eine gute elastische Verformbarkeit beim Einbau und Beständigkeit gegenüber hohen Temperaturen und den verschiedenen Abdichtmedien besitzt. Die Dichtung ist darüberhinaus auch praktisch unbegrenzt lagerfähig, ohne ihre Eigenschaften zu verändern, so daß die Dichtung ohne besondere Maßnahmen über längere Zeit einbaufertig lagerbar ist.

- 7 -

Durch die Verwendung der radikalisch vernetzenden Silikone ist die Dichtung vor allem kostengünstig und wirtschaftlich in der Massenfertigung herstellbar. Die Imprägniermittelansätze sind über lange Zeiten und damit ohne größere Verluste einsetzbar, und die Vernetzung des Imprägniermittels kann durch in der Dichtung vorhandene Katalysatorgifte nicht gestört werden.

Das Imprägniermittel kann somit, unabhängig von der Beschaffenheit des Dichtungsmaterials, vorteilhaft für je den Weichstoffdichtungstyp verwendet werden. Die thermische Vernetzung des Imprägniermittels in der Dichtung, bei der die Oberflächen der Dichtung zunächst klebrig bleiben, kann besonders vorteilhaft zum Auftragen von Überzügen und Auflagen und deren besonders feste Bindung an die Dichtung genutzt werden.

Die Erfindung wird anhand eines Ausführungsbeispieles näher erläutert.

Ausgegangen wird von einem flüssigen Polysilikonacrylat, welches als Vernetzer 4 Gewichtsprozent Dicumylperoxid enthält.

Mit diesem Silikon werden Zylinderkopfdichtungen aus metallisch verstärkten Asbestfaservliesen mit einer Porenfüllung von 80 Volumenprozent durch Tauchen imprägniert.

- 8 -

Das Imprägniermittel in den Dichtungsplatten wird 2 Minuten in einem Ofen bei 270°C vernetzt und anschließend sofort beidseitig während 2 Minuten mit einer UV-Lampe mit einer Leistungsstärke von 80 Watt/cm2 bestrahlt.

Das Funktionsverhalten der Dichtungen wurde überprüft. Es ergaben sich Werte für das Verformungsverhalten, das Abdichtvermögen und die Festigkeit, die mit denen herkömmlicher Dichtungen vergleichbar waren. Die Temperaturbeständigkeit und die Beständigkeit gegenüber den Abdichtmedien zeigten sich gegenüber herkömmlichen Dichtungen wesentlich verbessert.

Im Alterungstest wurde keine wesentliche Veränderung des Funktionsverhaltens nach 6-monatiger Lagerung bei 70°C festgestellt.

- 1 -

Patentansprüche:

1. Weichstoffflachdichtung, insbesondere Zylinderkopfdichtung oder Auspuffflanschdichtung für Verbrennungskraftmaschinen, bestehend aus einem gegebenenfalls metallisch verstärkten Faservlies, das mit
einem Silikon imprägniert ist, dadurch gekennzeichnet, daß das Silikon unter Einwirkung von Radikalbildnern thermisch vorvernetzt und im Oberflächenbereich der Dichtung mit einer energiereichen Strahlung vor- oder nachvernetzt ist.

2. Weichstoffflachdichtung nach Anspruch 1, dadurch gekennzeichnet, daß das Imprägniermittel aus flüssigen
Polyvinylsiloxanen und/oder Silikonacrylaten besteht.

3. Weichstoffflachdichtung nach den Ansprüchen 1 und 2,
dadurch gekennzeichnet, daß das Imprägniermittel 2
bis 5 Gewichtsprozent organische Peroxide als Radikalbildner enthält.

4. Weichstoffflachdichtung nach den Ansprüchen 1 bis 3,
dadurch gekennzeichnet, daß das Imprägniermittel im
Oberflächenbereich der Dichtung durch UV-Strahlung
vor- oder nachvernetzt ist.

5. Weichstoffflachdichtung nach den Ansprüchen 1 bis 4,
dadurch gekennzeichnet, daß das Imprägniermittel 2
bis 5 Gewichtsprozent eines Photoinitiators enthält.

- 2 -

6. Weichstoffflachdichtung nach den Ansprüchen 1 bis 5, dadurch gekennzeichnet, daß auf die Oberflächen der Dichtung vor der Nachvernetzung ganzflächig oder partiell Überzugsmassen aufgetragen sind, die zusammen mit dem Imprägniermittel im Oberflächenbereich der Dichtung durch Strahlung nachvernetzt sind.

7. Weichstoffflachdichtung nach den Ansprüchen 1 bis 6, dadurch gekennzeichnet, daß die Überzugsmassen aus strahlungsvernetzenden Polymeren und/oder pulverigen bis feinkörnigen festen Stoffen bestehen.

8. Weichstoffflachdichtung nach den Ansprüchen 1 bis 7, dadurch gekennzeichnet, daß auf die Oberflächen der Dichtung vor der Nachvernetzung partiell Metallblechauflagen aufgetragen sind.